# EUROPÄISCHE PATENTSCHRIFT

(11) **EP 2 536 962 B1**
(45) Veröffentlichungstag und Bekanntmachung des Hinweises auf die Patenterteilung: **20.09.2017**
(21) Anmeldenummer: 11731082.1
(22) Anmeldetag: 09.02.2011
(51) Int. Cl.: F16F 15/32

(54) **KERAMISCHES AUSWUCHTGEWICHT**
CERAMIC BALANCE WEIGHT
CONTREPOIDS CÉRAMIQUE

(30) Priorität: 20.02.2010 DE 102010008657
(43) Veröffentlichungstag der Anmeldung: 26.12.2012
(73) Patentinhaber: Fischer, Erika, 73235 Weilheim/Teck (DE)
(72) Erfinder: Fischer, Erika, 73235 Weilheim/Teck (DE)
(74) Vertreter: Rüger, Barthelt & Abel
(86) Internationale Anmeldenummer: PCT/IB2011/050549
(87) Internationale Veröffentlichungsnummer: WO 2011/101775

(56) Entgegenhaltungen:
- WO-A1-99/00609
- WO-A1-2009/118518
- GB-A- 2 366 259

## Beschreibung

Die Erfindung betrifft ein Radgewicht zur Montage an einem Kraftfahrzeugrad zur Aufwuchtung desselben.

Es ist bekannt, zur Beseitigung von Unwuchten von Kraftfahrzeugrädern an ausgewählten Stellen der Felgen Radgewichte mit geeigneter Masse anzubringen und dadurch letztlich die Drehachse und den Schwerpunkt des Rads in Übereinstimmung zu bringen. Üblicherweise werden dazu Bleigewichte genutzt, die mit einem geeigneten Klebemittel, wie beispielsweise einem Klebeband oder auch mechanischen Befestigungsmitteln, wie Klammern oder dergleichen, an der Felge angebracht werden.

Die Verbindung muss bedarfsweise lösbar sein, denn die Unwucht eines Kraftfahrzeugrads rührt meist von einer kaum zu vermeidenden Ungleichmäßigkeit des Reifens her. Nach einem Reifenwechsel muss das Rad neu ausgewuchtet werden. Deshalb müssen die Radgewichte von der Felge gelöst werden können, ohne diese zu beschädigen. Anderseits sollen die Radgewichte auf einfacher Weise mit der Felge verbunden werden können und sie müssen dort dauerhaft gehalten sein, so dass sie während der Fahrt nicht verloren gehen.

Der Verlust eines Radgewichts hat nicht nur die sofortige Unwucht des Rades zur Folge, sondern kann darüber hinaus eine Gefährdung von Passanten darstellen. Abgeschleuderte Radgewichte können außerdem Fahrzeuge beschädigen. Schlussendlich aber stellen verlorene Radgewichte wegen ihrer Beschaffenheit aus Blei auch eine Umweltgefahr dar.

Insbesondere wegen letzterer Erwägungen schlägt die DE 698 29 751 T2 vor, Radgewichte aus Glas herzustellen. Der betreffende Glaskörper des Radgewichts weist eine allseits gerundete Form auf. Er kann mittels einer Klemme oder auch mittels einer Klebeschicht an der Felge befestigt werden.

Im Vergleich zu Bleigewichten haben diese aus Glas bestehenden Radgewichte eine geringere umweltverschmutzende Wirkung, wenn sie sich versehentlich von der Felge lösen. Andererseits weisen die Radgewichte aufgrund der geringen Dichte von Glas relativ große Abmessungen auf. Auch können die Glasgewichte, anders als Bleigewichte, nicht einfach an verschieden geformte Felgenoberflächen angeformt werden. Die Befestigung von Glasgewichten an der Felge ist zumindest schwierig. Diese Umstände erschweren den Einsatz.

Die GB 2 366 259 A schlägt Radgewichte aus Kunststoff oder Keramik vor, die mit einem Bügel an einem Rad zu befestigen sind.

Die WO 99/00609 A1 schlägt Radgewichte aus Keramik vor, die aus Ton und/oder Metall bestehen und in einem oder mehreren Schritten gebrannt sind.

Davon ausgehend ist es Aufgabe der Erfindung eine verbesserte Alternative zu Rad-Bleigewichten anzugeben.

Diese Aufgabe wird mit dem Radgewicht nach Anspruch 1 gelöst.

Das erfindungsgemäße Radgewicht ist aus Keramik ausgebildet, wobei der Körper eine isostatisch gepresster Sinterkörper ist und aus einer hochverdichteten Sinterkeramik besteht. Keramik ist weitgehend innert und ungiftig. Versehentlich verlorene Radgewichte stellen somit für die Umwelt keine Belastung dar. Keramikgewichte können gegenüber Glasgewichten deutlich kleiner ausgebildet werden, wenn eine Keramik mit entsprechend hoher Dichte gewählt wird. Damit lässt sich die Akzeptanz nicht aus Blei bestehender Radgewichte erhöhen. Außerdem lässt sich Keramik wegen der naturgemäß rauen Oberflächen leicht lackieren und somit in Felgenfarbe bereitstellen.

Weiter können die Radgewichte aus Keramik serienmäßig mit sehr gut definierter Form herstellen. Anders als Glasgewichte, deren Oberfläche durch die Herstellung im Schmelzverfahren keine präzise geometrische Form aufweist, können Keramikkörper durch Pressen und Sintern mit wohldefinierten Oberflächenformen bereitgestellt werden.

Die Herstellung von Radgewichten aus Keramik stellt eine kostengünstige Alternative zu Radgewichten aus Blei dar. Außerdem ist es mit technisch einfachen Mitteln möglich, Keramikgewichte mit geringer Massetoleranz bereit zu stellen. Die Einhaltung der gewünschten Masse mit enger Toleranz ist schon ohne individuelle Kalibrierung der einzelnen Radgewichte, vor oder nach dem Sintern, möglich. Auch erhöhte Toleranzforderungen können erfüllt werden, z.B. indem die Radgewichte vor oder nach dem Sintern gewichtsmäßig kalibriert werden. Z.B. können die durch das Pressen erhaltenen Grünlinge kalibriert und dann gesintert werden. Alternativ kann eine Gewichtskalibrierung nach dem Sintern z.B. durch Schleifen erfolgen.

Vorzugsweise werden die Keramikgewichte als Sinterkeramik, beispielsweise als Oxidkeramik bereitgestellt. Die Anwendung von Reaktionskeramik ist möglich. Vorzugsweise kommt hier Aluminiumoxidkeramik zum Einsatz. Zur Verbesserung mechanischer Eigenschaften können weitere Oxide wie Zirkonoxid enthalten sein. Es können auch Nichtoxidkeramikmaterialien, wie z.B. SiN oder SiC zur Herstellung der Keramikgewichte genutzt werden. Außerdem können Mischoxide, Feldspatkeramiken sowie Keramikmaterialien der Grppen C221 bis C799 Mullite, Steatite, Kordierite, Fosterite, Aluminiumsilikate oder sonstige allgemeine Keramikwerkstoffe oder Gemische aus diesen Anwendung finden. Die genannten Keramikmaterialien können als homogene Materialien oder Materialgemische mit wenigstens zwei der oben genannten Materialien zur Anwendung kommen. Es können auch zwei oder mehrere der oben genanten Materialien in einem inhomogenen Keramikkörper zusammengefasst sein. Z.B. kann in einem Keramikkörper aus einem ersten Material ein Kern aus einem anderen (Keramik-)Material ausgebildet sein.

Es ist möglich, den Keramikkörper aus hochverdichteter Keramik zu erzeugen. Dazu kann der aus den entsprechenden pulverförmigen Metalloxiden bestehende Ausgangskörper vor dem Sintern mit hohem Druck, beispielsweise isostatisch, gepresst werden, Keramikdichten von bis zu 6 g/cm³ und darüber sind dabei erzielbar. Zugleich können die Keramikkörper durch entsprechend präzise geführte Pressvorgänge mit geringer Gewichtstoleranz bereitgestellt werden. Darüber hinaus können die Keramikkörper vorzugsweise vor dem Sintern gegebenenfalls aber auch danach, durch entsprechende Abtragemaßnahmen, beispielsweise Schleifen hinsichtlich ihres Gewichts kalibriert werden. Dazu können an dem Keramikkörper ein oder mehrere spezielle Abschnitte vorgesehen werden, z.B. Zapfen, Noppen oder Vorsprünge, die zur Kalibrierung partiell oder ganz abgeschliffen werden können.

Zur Erhöhung der spezifischen Dichte des Keramikkörpers kann, wie erwähnt, erhöhter isostatisch aufgebrachter Pressdruck genutzt werden. Unabhängig davon ist es auch möglich, den Keramikkörper durch einen oder mehrere eingelagerte schwere Partikel zu einem erhöhten Gewicht zu verhelfen. Z.B. kann der Keramikkörper mit einem metallischen oder nicht-metallischen Inlay (z.B.aus einer Feldspatkeramik oder einer Schwerspatkeramik) versehen sein. Auch kann die Keramik schwere Metallsalze wie z.B. Bariumverbindunge, insbesondere Bariumsalze, z.B. Schwerspat, in kompakter oder disperser Form enthalten. Z.B. kann die an der Oberfläche vorhandene Keramik aus einem optisch ansprechenden oder nach seiner chemischen oder mechanischen Widerstandsfähigkeit ausgewählten Material bestehen und eine Hülle bilden. Innenliegende Teile des Keramikgewichts werden von der Hülle geschützt und können nach anderen Gesichtspunkten, z.B. großer Massendichte ausgewählt werden.

Der Körper des Radgewichts ist vorzugsweise etwa quaderförmig oder auch rund ausgebildet. Dabei ist die dem Rad zugewandte Fläche vorzugsweise etwas gewölbt ausgebildet, um im eingebauten Zustand wenigstens einigermaßen an der Felge anzuliegen. Die konkave Wölbung dieser Fläche folgt somit der Krümmung einer üblichen Kraftfahrzeugfelge von beispielsweise 17 Zoll bis 19 Zoll Durchmesser. Auch in Querrichtung dazu kann die betreffende Fläche mit einer gewissen Wölbung versehen sein.

Zur Befestigung des Radgewichts an dem Rad können verschiedene Mittel dienen. Es ist möglich, das aus Keramik bestehende Radgewicht, ähnlich wie ein aus Blei bestehendes Gewicht, mittels Klebebands, Klebstoffs oder eines anderen Klebemittels an der Felge zu befestigen. Beispielsweise können die Keramikgewichte auf einem Klebeband vorkonfektioniert geliefert werden. Das Klebeband ist vorzugsweise an der gewölbten Fläche des Radgewichts angebracht und weist eine gewisse Dicke von beispielsweise einem Millimeter auf und ist etwas vorzugsweise zumindest etwas komprimierbar. Damit kann das Klebeband unterschiedliche Krümmungsradien zwischen der gewölbten Fläche des Radgewichts und der entsprechenden Befestigungsfläche ausgleichen, die beispielsweise durch eine Innenumfangsfläche der Felge gebildet wird.

Es ist auch möglich als Befestigungsmittel eine Klammer vorzusehen. Die Klammer kann beispielsweise durch einen aus Stahlblech oder einem anderen geeigneten Material bestehenden Bügel gebildet werden. Vorzugsweise weist das keramische Radgewicht ein Formschlussmittel auf, um den Bügel und das Radgewicht in montiertem Zustand in fester räumlicher Beziehung zueinander zu halten. Z.B. kann an einem Radgewicht ein Vorsprung vorgesehen sein, der in einen entsprechenden Ausschnitt des Befestigungsbügels passt. Umgekehrt kann auch der Befestigungsbügel mit einem Vorsprung versehen sein, der in eine entsprechende Ausnehmung des Radgewichts passt. Vorzugsweise sind entsprechende Vorsprünge und Ausnehmungen somit jeweils etwa komplementär zueinander ausgebildet. Weiter vorzugsweise weisen sie einen unrunden Querschnitt auf, womit eine Verdrehung des Radgewichts gegen den Bügel verhindert wird.

Bei einer bevorzugten Ausführungsform ist die dem Rad zugewandte Fläche des Radgewichts mit einem Ausgleichskörper versehen, der eine gewisse elastische oder plastische Nachgiebigkeit hat. Dieser Ausgleichskörper kann durch Schaumgummi, Gummi, unvulkanisiertes Gummi, Acryl, Filz oder ähnliches gebildet sein. Der Ausgleichskörper füllt den sich zwischen dem Radgewicht und der Felge bildenden Spalt und kann, wenn er ausreichend nachgiebig bemessen ist, ungleiche Spaltweiten ausgleichen und ein Klappern oder Verrutschen des Radgewichts verhindern. Außerdem kann er dazu ausgelegt sein, durch seine Haftreibung an der Felge den Sitz des Radgewichts zu verbessern.

Weitere Einzelheiten sind Gegenstand von Ansprüchen, der Zeichnung oder der Beschreibung. Es zeigen:
- Fig. 1: ein Kraftfahrzeugrad mit daran montierten Radgewichten;
- Fig. 2: ein Radgewicht in gesonderter vergrößerter und perspektivischer Darstellung;
- Fig. 3: ein Radgewicht in Seitenansicht;
- Fig. 4: eine abgewandelte Ausführungsform eines Radgewichts in Seitenansicht;
- Fig. 5: eine erste Ausführungsform eines Radgewichts mit Befestigungsbügel in perspektivischer Explosionsdarstellung und
- Fig. 6: eine weitere Ausführungsform eines erfindungsgemäßen Radgewichts mit Befestigungsbügel in Explosionsdarstellung.

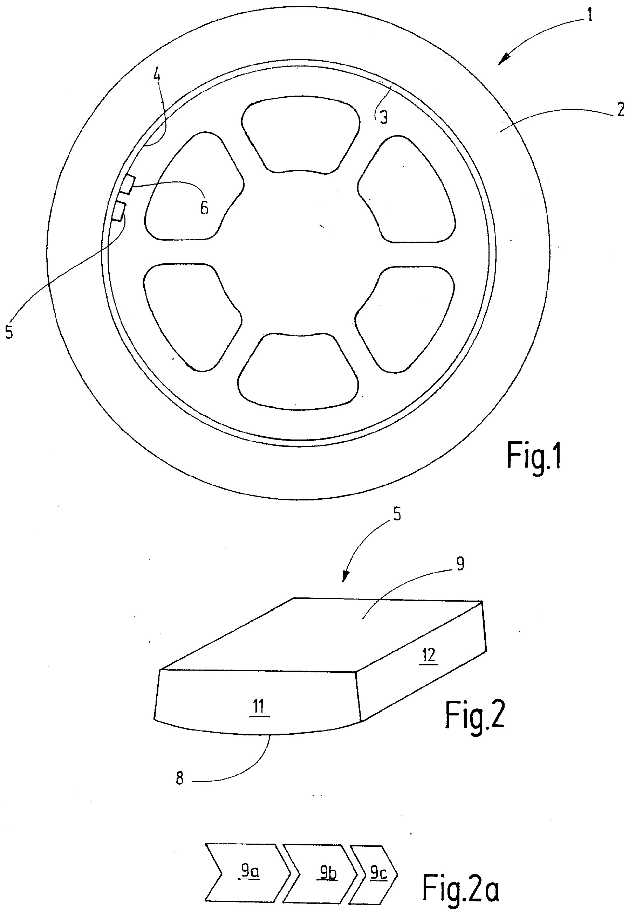

In Fig. 1 ist ein Kraftfahrzeugrad 1 veranschaulicht, das einen Reifen 2 und eine vorzugsweise aus Metall bestehende Felge 3 umfasst.

Die Felge 3 weist eine beispielsweise zylindrische Innenumfangsfläche 4 auf, an der ein oder mehrere Radgewichte 5, 6 angeordnet sind. Diese dienen der Auswuchtung des Kraftfahrzeugrads 1. Sie weisen gleiche oder unterschiedliche Formen und Gewichte auf. Stellvertretend für die beiden Radgewichte 5, 6 wird nachfolgend das Radgewicht 5 näher beschrieben. Diese Beschreibung gilt entsprechend für das Radgewicht 6, das jedoch in Form und Größe abweichen kann.

Fig. 2 veranschaulicht das Radgewicht 5 in perspektivischer Darstellung, wie ersichtlich weist es einen im wesentlichen quaderförmigen Körper 7 auf, der von sechs ebenen Flächen umgeben sein kann. Vorzugsweise ist aber wenigstens eine der sechs Flächen gewölbt ausgebildet. In Fig. 2 ist dies die untere Fläche 8, die in eingebautem Zustand an der Innenumfangsfläche 4 der Felge 3 anliegt. Diese Fläche 8 kann mit einer Wölbung versehen sein, die wenigstens näherungsweise mit der Wölbung der Innenumfangsfläche 4 übereinstimmt. Hierbei kommt es nicht auf eine mathematisch präzise Übereinstimmung an. Jedoch wird eine leichte konvexe Wölbung der Fläche 8 als vorteilhaft angesehen um eine wenigstens näherungsweise flächenhafte Anlage zwischen der Fläche 8 und der Innenumfangsfläche 4 zu erzielen.

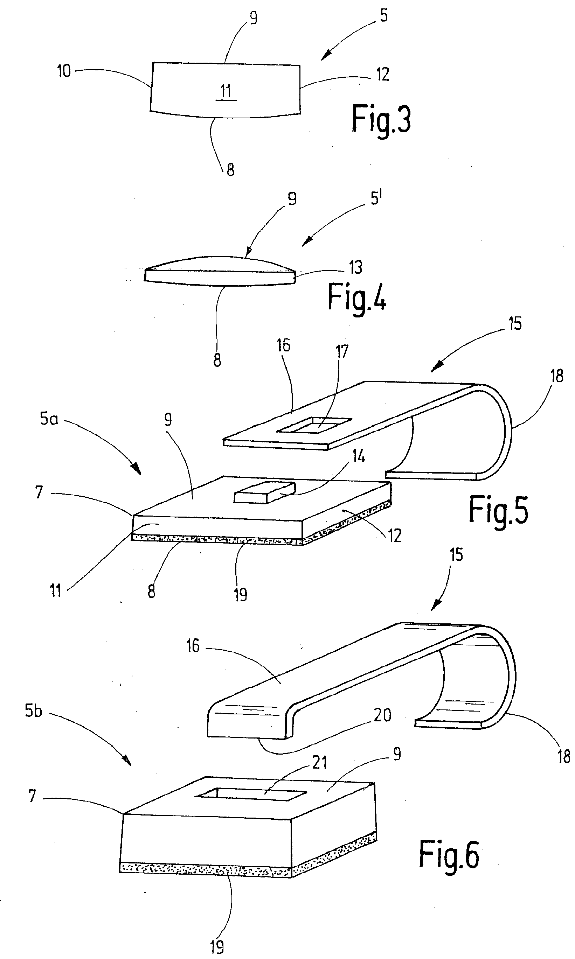

Zur weiteren Verdeutlichung wird auf Fig. 3 verwiesen, die ebenfalls das Radgewicht 5 zeigt. Die der Fläche 8 gegenüberliegende Deckfläche 9 kann als ebene Fläche ausgebildet sein. Sie kann auch anderweitig geformt sein und beispielsweise konkav oder konvex gewölbt sein. Weiter kann sie mit erhabenem oder vertiefen Reliefs, Beschriftungen, Logos und dergleichen versehen sein.

Die Seitenflächen 10, 11, 12 des Radgewichts 5 sind vorzugsweise ebene Flächen. Sie können an geraden oder an gerundeten Kanten ineinander übergehen. Vorzugsweise sind die Seitenflächen 10, 11, 12 etwas gegen die Fläche 8 und/oder die Deckflächen 9 geneigt angeordnet. Der Neigungswinkel kann z.B. einen oder wenige Grad betragen. In Fig. 2 ist er überhöht dargestellt. Durch die genannte Neigung nimmt die Querschnittsfläche des Körpers 5 von der Fläche 8 zu der Deckfläche 9 hin kontinuierlich ab. Der Körper 5 ist somit vorzugsweise ein Pyramidenstumpf mit recheckiger oder quadratischer Grundfläche oder ein Kegelstumpf mit kreisförmiger oder elliptischer Grundfläche.

De Deckfläche 9 ist vorzugsweise rechteckig oder quadratisch ausgebildet. Sie kann jedoch auch kreisförmig, oval, sechseckig, fünfeckig oder anderweitig ausgebildet sein. Insbesondere ist es möglich pfeilförmige Boden- und Deckflächen vorzusehen, wie es Fig. 2a für mehrere gleiche oder verschieden große aneinander angereihte Radgewichte in Draufsicht veranschaulicht. Die entsprechenden Deckflächen sind mit 9a, 9b, 9c bezeichnet. Die einzelnen Radgewichte können sehr leicht zu einer Reihe aneinander angereiht werden, wobei ihre Ausrichtung innerhalb der Reiche erleichtert ist.

Die Deckflächen 9 können eben oder, wie es Fig. 4 zeigt, in ein oder mehreren Richtungen konkav oder konvex gewölbt ausgebildet sein.

Die Körper 7 der vorstehend und nachstehend beschriebenen Radgewichte bestehen aus Keramik, vorzugsweise einer Sinterkeramik. Es kann hierbei prinzipiell jede geeignete Keramik Verwendung finden, vorzugsweise handelt es sich um eine Aluminiumoxidkeramik. Diese kann außerdem andere Metalloxide wie beispielsweise Zirkonoxid enthalten. Zur Herstellung wird aus einem geeigneten Grundmaterial pulvriger Beschaffenheit oder mindestens pulvrigen Bestandteilen ein Rohling im Pressverfahren hergestellt, der dann gebrannt wird. Vorzugsweise wird der Rohling hochverdichtet, damit der Körper 7 des Radgewichts 5 bei hohem Gewicht ein geringes Volumen aufweist.

Zur Erhöhung des Gewichts können in den Körper 7 schwere Bestandteile, beispielsweise in Gestalt eines oder mehrer kompakter Bestandteile oder als körnige oder pulverförmige Bestandteile vorliegende Materialien hoher Dichte eingearbeitet sein. Beispielsweise kann das Keramikmaterial des Körpers 7 Bariumverbindungen wie Bariumoxid, Bariumsulfat (Schwerspat) oder dergleichen enthalten. Vorzugsweise enthält die Keramik 7 keinerlei gesundheitsgefährdende oder umweltschädliche Bestandteile wie Schwermetalle oder dergleichen.

Die aus Keramik bestehende Radgewichte 5, 6 sind, anders als Bleigewichte, starr und in ihrer geometrischen Form präzise bestimmt. Sie können während ihrer Fertigung hinsichtlich ihres Gewichts, z.B. vor oder nach dem Sintern, kalibriert worden sein. Dies kann durch Wiegen und nachfolgendes Abtragen z.B. Schaben, Bohren, Fräsen, Schleifen oder dergleichen vorgenommen worden sein. Dies gilt für alle hier vorgestellten Ausführungsformen einschließlich der Ausführungsform nach Fig. 4, in der ein ungefähr linsenförmiges Radgewicht 5' mit sphärischer Deckfläche 9 und ringsum laufender runder (etwa zylindrischer, genaugenommen konischer) Seitenfläche 13 dargestellt ist.

Die Radgewichte 5,6 können durch Kleben an der Innenumfangsfläche 4 befestigt werden. Dazu kann Klebstoff dienen. Es ist auch möglich hierzu ein doppelseitiges Klebeband oder ähnliche Mittel einzusetzen die die Fläche 8 mit der Innenumfangsfläche 4 verbinden. Darüber hinaus ist es möglich, die aus Keramik bestehenden Radgewichte formschlüssig an der Felge 3 zu befestigen. Ein Beispiel veranschaulicht Fig. 5. Das dort veranschaulichte Radgewicht 5a entspricht weitgehend dem vorbeschriebenen Radgewicht 5 nach Fig. 2. Seine Fläche 8 kann gewölbt oder, wie dargestellt, auch eben ausgebildet sein. An der Deckfläche 9 kann ein Formschlussmittel z.B. in Gestalt eines Vorsprungs 14 angeordnet sein. Dieser kann, wie dargestellt, etwa quaderförmig, genau genommen vorzugsweise pyramidenstumpfförmig, ausgebildet sein. Wie die Seitenflächen 11, 12 des Körpers 7 können auch die Seitenflächen des Vorsprungs 14 leicht nach innen geneigt sein. Der stirnseitige Abschluss des Vorsprungs 14 ist vorzugsweise wiederum eben oder auch gerundet, z.B. konvex sphärisch gekrümmt oder ähnlich ausgebildet.

Der zugehörige Befestigungsbügel 15 besteht beispielsweise aus Stahl. Er weist eine Lasche 16 auf, die eine Vertiefung oder ein Fenster 17 zur Aufnahme des Vorsprungs 14 aufweisen kann. Der Umriss des Fensters 17 entspricht vorzugsweise dem Außenumriss des Vorsprungs 14, so dass dieser mit Spiel oder auch mit leichter Klemmwirkung in das Fenster 17 findet. Der Vorsprung kann im Rohzustand eine Länge aufweisen, die größer ist als die Dicke der Lasche 16. Wenn die Masse des Radgewichts kalibriert werden soll, ist es möglich, den Vorsprung vor oder nach dem Brennen des Körpers 7 an der Stirnseite etwas abzutragen, z.B. abzuschleifen. Alternativ kann der Körper 7 an anderen Stellen vor oder nach dem Brennen abgetragen werden, um die gewünschte Masse einzustellen.

Der Bügel 15 kann ein ein- oder mehrfach gebogenes Ende 18 aufweisen, das der Befestigung an der Felge 3 dient.

An der Fläche 8 ist vorzugsweise ein Ausgleichskörper 19 befestigt. Dieser stimmt vorzugsweise mit dem Außenumriss des Körpers 7 überein. Vorzugsweise hat er eine gewisse Nachgiebigkeit, um sich an die Innenumfangsfläche 4 anzupassen und etwaige Krümmungsunterschiede der Flächen 8 und 4 auszugleichen. Der Ausgleichskörper 19 kann beispielsweise aus nicht oder wenig vernetztem Kautschuk, Filz Acryl, Moosgummi oder anderen plastisch oder elastisch nachgiebigem Materialien besehen. Er kann die Fläche 8 vollständig oder teilweise bedecken und beispielsweise streifen- oder ringförmig ausgebildet sein. Er sorgt für einen klapperfreien Sitz des Körpers 7 an der Felge 3. Z.B. kann der Ausgleichskörper 19 mit der Grundfläche 8 verklebt sein. Auch kann er z.B. anvulkanisiert sein. Andere Verbindungsverfahren sind möglich. An seiner dem Rad zugewandten Seite kann der Ausgleichskörper mit Kleb- oder Haftstoff versehen sein. Alternativ kann die dem Rad zugewandte Fläche frei von Klebe- oder Haftmitteln sein.

Die vorstehende Beschreibung verschiedener Ausführungsformen des Radgewichts 5, insbesondere die Beschreibung der Ausführungsform nach Fig. 5, gilt entsprechend für das Radgewicht 5b nach Fig. 6. Ergänzend wird darauf hingewiesen, dass der Formschluss zwischen dem Befestigungsbügel 15 und dem Radgewicht 5b durch einen Vorsprung 20 der Lasche 16 und eine entsprechende Vertiefung oder Ausnehmung 21 in dem Radgewicht 5b gebildet ist. Der Vorsprung 20 kann durch ein angewinkeltes Ende der Befestigungslasche 15 gebildet sein. Die Vertiefung 21 kann eine sack-, loch- oder rinnenartige Vertiefung sein, die z.B. in der Mitte der Deckfläche 9 oder auch exzentrisch in dieser angeordnet ist. Wiederum dient ein optionaler Ausgleichskörper 19 der Anpassung und besseren Anlage des Radgewichts 5b an der Felge 3.

Das erfindungsgemäße Radgewicht 5 besteht aus einem aus Keramik ausgebildeten Körper 7. Dieser ist mit Mitteln zum stoffschlüssigen und/oder formschlüssigen Befestigen an einer Felge 3 vorgesehen. Der Körper 7 weist einen Querschnitt auf, der entlang einer vorgegebenen Richtung, beispielsweise der Normalenrichtung seiner Deckfläche 9 abnimmt. Der Keramikkörper kann ein hohes spezifisches Gewicht von beispielsweise zwei oder mehr g/cm³ aufweisen.

### Bezugszeichen

- 1: Kraftfahrzeugrad
- 2: Reifen
- 3: Felge
- 4: Innenumfangsfläche
- 5: Radgewicht 5', 5a
- 6: Radgewicht
- 7: Körper
- 8: Fläche
- 9: Deckfläche (auch 9a, 9b, 9c)
- 10: Seitenfläche
- 11: Seitenfläche
- 12: Seitenfläche
- 13: Seitenfläche
- 14: Vorsprung
- 15: Befestigungsbügel
- 16: Lasche
- 17: Fenster
- 18: Ende
- 19: Ausgleichskörper
- 20: Vorsprung
- 21: Vertiefung

## Patentansprüche

1. Radgewicht (5) zur Montage an einem Kraftfahrzeugrad, um dieses auszuwuchten,
mit einem starren Körper (7), der zumindest ein Befestigungsmittel aufweist,
**dadurch gekennzeichnet,**
**dass** der Körper (7) aus einer Keramik ausgebildet ist, wobei der Körper (7) ein isostatisch gepresster Sinterkörper ist und aus einer hochverdichteten Sinterkeramik besteht.

2. Radgewicht nach Anspruch 1, **dadurch gekennzeichnet, dass** ein in befestigtem Zustand dem Rad zugewandte Fläche (8) eine Wölbung aufweist.

3. Radgewicht nach Anspruch 1, **dadurch gekennzeichnet, dass** das Befestigungsmittel eine Klebstoffschicht ist, die an einer Fläche (8) des Körpers (7) angeordnet ist.

4. Radgewicht nach Anspruch 1, **dadurch gekennzeichnet, dass** das Befestigungsmittel eine Klammer (15) umfasst.

5. Radgewicht nach Anspruch 4, **dadurch gekennzeichnet, dass** an einer Fläche des Körpers (7) eine Vertiefung (21) oder ein Vorsprung (14) ausgebildet ist, um mit der Klammer (15) eine Formschlussverbindung auszubilden.

6. Radgewicht nach Anspruch 5, **dadurch gekennzeichnet, dass** die Vertiefung (21) oder der Vorsprung (14) einen unrunden Querschnitt aufweisen.

7. Radgewicht nach Anspruch 1, **dadurch gekennzeichnet, dass** der Körper (7) hinterschneidungsfrei ausgebildet ist und einen von einer Fläche (9) zu einer gegenüberliegenden Fläche (8) zunehmenden Querschnitt aufweist.

8. Radgewicht nach Anspruch 1, **dadurch gekennzeichnet, dass** der Körper (7) aus einer Aluminiumoxidkeramik besteht.

## Claims

1. Wheel weight (5) for mounting on a motor vehicle wheel in order to balance this, with a rigid body (7) which has at least one fixing means, **characterised in that** the body (7) is made of a ceramic, wherein the body (7) is an isostatically pressed sinter body and consists of a highly compacted sinter ceramic.

2. Wheel weight according to claim 1, **characterised in that** a face (8) facing the wheel in the mounted state has a curvature.

3. Wheel weight according to claim 1, **characterised in that** the fixing means is a layer of adhesive arranged on a face (8) of the body (7).

4. Wheel weight according to claim 1, **characterised in that** the fixing means comprises a clamp (15).

5. Wheel weight according to claim 4, **characterised in that** a recess (21) or a protrusion (14) is formed on a surface of the body (7) in order to form an interference fit connection with the clamp (15).

6. Wheel weight according to claim 5, **characterised in that** the recess (21) or the protrusion (14) has a non-round cross section.

7. Wheel weight according to claim 1, **characterised in that** the body (7) is formed without an undercut and has a cross-section increasing from one face (9) to an opposite face (8).

8. Wheel weight according to claim 1, **characterised in that** the body (7) consists of an aluminium oxide ceramic.

## Revendications

1. Masse de roue (5) destinée au montage sur une roue de véhicule à moteur, afin d'équilibrer celle-ci,
comprenant un corps (7) rigide qui présente au moins un moyen de fixation,
**caractérisée en ce que**
le corps (7) est formé d'une céramique, le corps (7) étant un corps fritté, réalisé par compression isostatique, et se composant d'une céramique frittée à haute densité.

2. Masse de roue selon la revendication 1, **caractérisée en ce qu'**une surface (8), tournée vers la roue à l'état fixé, présente une courbure.

3. Masse de roue selon la revendication 1, **caractérisée en ce que** le moyen de fixation est une couche d'adhésif qui est disposée sur une surface (8) du corps (7).

4. Masse de roue selon la revendication 1, **caractérisée en ce que** le moyen de fixation comprend une agrafe (15).

5. Masse de roue selon la revendication 4, **caractérisée en ce qu'**un évidement (21) ou une saillie (14) est réalisé(e) sur une surface du corps (7), en vue de créer une liaison mécanique avec l'agrafe (15).

6. Masse de roue selon la revendication 5, **caractérisée en ce que** l'évidement (21) ou la saillie (14) présentent une section non ronde.

7. Masse de roue selon la revendication 1, **caractérisée en ce que** le corps (7) est réalisé sans contre-dépouilles et présente une section qui va en augmentant à partir d'une surface (9) jusqu'à une surface (8) opposée.

8. Masse de roue selon la revendication 1, **caractérisée en ce que** le corps (7) est constitué d'une céramique d'oxyde d'aluminium.
